# EUROPÄISCHE PATENTANMELDUNG

(11) **EP 4 404 024 A1**
(43) Veröffentlichungstag der Anmeldung: **24.07.2024**
(21) Anmeldenummer: 24172679.3
(22) Anmeldetag: 13.05.2022
(51) Int. Cl.: G05D 23/13, F16K 31/60

(54) **VERSTELLEINHEIT FÜR EINE THERMOSTATKARTUSCHE**

(62) Teilanmeldung aus: 22173164.9
(71) Anmelder: Ideal Standard International NV, 1935 Zaventem (BE)
(72) Erfinder: Kaiser, Sebastian, 56843 Starkenburg (DE); Selzner, Christian, 54518 Bergweiler (DE)
(74) Vertreter: Feucker, Max Martin

(57) **Zusammenfassung**

Die Erfindung betrifft Verstelleinheit (1) für eine Thermostatkartusche (2), wobei die Verstelleinheit (1) einen Drehgriff (3), einen beweglich gelagerten Anschlagkörper (4) und eine Führungsbahn (5) für den Anschlagkörper (4) umfasst, wobei die Führungsbahn (5) spiralförmig oder schraubenförmig ausgebildet ist.

## Beschreibung

Die vorliegende Erfindung betrifft eine Verstelleinheit für eine Thermostatkartusche sowie ein sanitäres Thermostatmischventil mit einer Thermostatkartusche und einer Verstelleinheit. Die Erfindung betrifft zudem eine Sanitärarmatur, in der ein solches sanitäres Thermostatmischventil verbaut ist.

Die Thermostatkartusche umfasst in der Regel einen Heißwassereinlass, einen Kaltwassereinlass sowie einen Mischwasserauslass. Zwischen den Einlässen und dem Mischwasserauslass ist ein insbesondere als Dehnstoffelement ausgebildetes Thermostatelement angeordnet, welches in einem von dem Mischwasser durchflossenen Raum angeordnet ist. Das Thermostatelement ist einerseits mit einer Einstellhülse gekoppelt, welche den Zufluss von Heißwasser und Kaltwasser zu dem Mischwasserraum einstellt. Das Thermostatelement liegt andererseits an einem Anschlag an, dessen Lage von einem Benutzer eingestellt werden kann. Die Höhe der Mischwasser-Solltemperatur hängt somit von der Lage des Anschlags ab.

Die Thermostatkartusche weist in der Regel eine Welle (welche auch als Spindel bezeichnet werden kann) auf, die mit dem Anschlag direkt oder indirekt gekoppelt ist und auf welche eine Verstelleinheit angebracht werden kann. Mit der Verstelleinheit kann die Welle betätigt werden und somit die Lage des Anschlags verändert werden. Hierzu weist die Verstelleinheit in der Regel einen Drehgriff auf, welcher drehfest mit der Welle verbunden ist und dadurch mit dem Anschlag der Thermostatkartusche gekoppelt ist. Insbesondere durch eine Drehbewegung des Drehgriffs kann somit die Lage des Anschlags mittels der Verstelleinheit verändert werden.

Die Verstelleinheit weist neben dem Drehgriff in der Regel weitere Bauteile auf, die so eingerichtet sind, dass mit dem Drehgriff eine Mischwassertemperatur zwischen einer minimalen Mischwassertemperatur (gegebenenfalls die Temperatur des Kaltwassers) und einer maximalen Mischwassertemperatur eingestellt werden kann. Die maximale Mischwassertemperatur ist dabei meist so gewählt, dass ein Benutzer sich nicht verbrühen kann. Andererseits ist es wünschenswert, dem Thermostatmischventil nachgelagerte sanitäre Einrichtungen regelmäßig mit Heißwasser zu spülen, um diese thermisch zu desinfizieren. Gleichzeitig soll aber auch eine Feineinstellung der Mischwassertemperatur möglich sein.

DE 10 2009 021 185 A1 schlägt hierzu vor, den Drehgriff und einen Anschlagkörper in Drehrichtung beweglich zueinander zu lagern. Somit soll es ermöglicht werden, dass der Drehgriff über einen Drehwinkel von mehr als 360° verdreht werden kann, wenn eine möglichst hohe Mischwassertemperatur (gegebenenfalls Bereitstellung von ausschließlich Heißwasser) erreicht werden soll.

Weitere Verstelleinheiten sind aus DE 10 2009 021 185 A1 und EP 3 133 462 A1 bekannt.

Aufgabe der vorliegenden Erfindung ist es, die mit Bezug zum Stand der Technik geschilderten Nachteile zu beseitigen und insbesondere eine Verstelleinheit anzugeben, mit der auf alternative Weise bei Bedarf eine hohe Mischwassertemperatur bereitgestellt werden kann, während gleichzeitig eine Feineinstellung der Mischwassertemperatur möglich ist.

Eine mögliche Lösung für diese Aufgabe ist mit der Verstelleinheit mit den Merkmalen des unabhängigen Anspruchs angegeben. Weitere Lösungen und vorteilhafte Weiterbildungen sind in der vorstehenden und nachfolgenden Beschreibung sowie in den abhängigen Ansprüchen angegeben, wobei einzelne Merkmale der vorteilhaften Weiterbildungen in technisch sinnvoller Weise miteinander kombinierbar sind.

Gelöst wird die Aufgabe insbesondere durch eine Verstelleinheit für eine Thermostatkartusche, welche einen Drehgriff, einen beweglich gelagerten Anschlagkörper und eine Führungsbahn für den Anschlagkörper umfasst. Die Erfindung zeichnet sich gegenüber dem Stand der Technik darin aus, dass die Führungsbahn schraubenförmig, beispielsweise an einer Außenumfangsfläche eines Bauteils der Verstelleinheit, oder spiralförmig, beispielsweise an einer axial ausgerichteten Fläche eines Bauteils der Verstelleinheit, ausgebildet ist. Dadurch, dass die Führungsbahn spiralförmig oder schraubenförmig ausgebildet ist, kann sich die Führungsbahn in Umfangsrichtung um mehr als 360° erstrecken.

Mit anderen Worten: Die Erfindung sieht in ihrem Grundgedanken vor, dass eine Führungsbahn für einen Anschlagkörper nicht rein kreisbogenförmig ausgebildet ist, sondern sich entweder zu einem Mittelpunkt einer Drehachse hin verjüngt (im Falle einer spiralförmigen Ausbildung der Führungsbahn) oder eine Steigung in axialer Richtung um die Drehachse (im Falle einer schraubenförmigen Ausbildung der Führungsbahn) aufweist. Somit ist es möglich, dass der Drehgriff über mehr als 360° gedreht wird, während der Anschlagkörper gleichzeitig in der Führungsbahn verbleibt. Somit ist eine Feineinstellung der Mischwassertemperatur möglich.

Der Drehgriff kann prinzipiell aus mehreren Bauteilen bestehen. Bevorzugt ist aber, dass der Drehgriff ein einteiliges Bauteil ist. Der Drehgriff ist dabei diejenige Baueinheit beziehungsweise dasjenige Bauteil, welche(s) von einem Benutzer für die Einstellung einer Solltemperatur betätigt wird.

In einer Ausführungsform kann die Führungsbahn an dem Drehgriff ausgebildet sein. In diesem Fall wäre der Anschlagkörper an einem anderen Bauteil der Verstelleinheit beweglich gelagert.

Bevorzugt ist jedoch, dass die Führungsbahn nicht an dem Drehgriff, sondern an einem anderen Bauteil der Verstelleinheit ausgebildet ist, zu welchem der Drehgriff während seiner Betätigung relativ verdreht wird. So ist bevorzugt vorgesehen, dass die Führungsbahn an einem Griffadapter ausgebildet ist, der drehfest mit einem Gehäuse einer Thermostatkartusche verbindbar ist, während der Drehgriff drehfest mit einer Welle zum Einstellen der Lage des Anschlags der Thermostatkartusche drehfest verbunden ist.

Insbesondere in diesem Zusammenhang kann vorgesehen sein, dass der Anschlagkörper beweglich an dem einteiligen oder mehrteiligen Drehgriff angebracht ist. Bei einer Drehbewegung des Drehgriffs folgt der Anschlagkörper also dieser Drehbewegung, während er gleichzeitig relativ zu dem Anschlagkörper insbesondere in einer radialen oder axialen Richtung beweglich gelagert ist.

Der Anschlagkörper ist insbesondere so beweglich gelagert, dass er bei einer Drehbewegung des Drehgriffs aufgrund der Wechselwirkung mit der Führungsbahn eine Bewegung in radialer Richtung (wenn die Führungsbahn spiralförmig ausgebildet ist) oder in axialer Richtung (wenn die Führungsbahn schraubenförmig ausgebildet ist) ausführt. Der Anschlagkörper ist also in einer quer zu der Führungsbahn ausgerichteten ersten Richtung beweglich gelagert.

Es kann beispielsweise vorgesehen sein, dass die Führungsbahn als eine Nut ausgebildet ist, in welche der Anschlagkörper eingreift. Der Anschlagkörper kann mit einem nicht in die Nut eingreifenden Bereich auf einer Art Stift oder Träger insbesondere geradlinig beweglich gelagert sein, so dass er sich bei einer Drehbewegung des Drehgriffs relativ zu dem Lager bewegt.

Insbesondere ist vorgesehen, dass der Anschlagkörper auf einem Träger, wie einem Stift, verschiebbar gelagert ist, so dass der Anschlagkörper während einer Drehbewegung des Drehgriffs relativ zu dem Träger beweglich ist. In einer bevorzugten Ausführungsform ist der Träger an dem Drehgriff angebracht oder Bestandteil des Drehgriffs.

Die Führungsbahn weist bevorzugt an einem ersten Ende einen ersten Endanschlag und an einem zweiten Ende einen zweiten Endanschlag auf. Wenn der Anschlagkörper an dem ersten Endanschlag anliegt, so befindet sich die Verstelleinheit in einem Zustand, in dem beispielsweise die minimale Mischwassertemperatur eingestellt ist. Wenn der Anschlagkörper an dem zweiten Endanschlag anliegt, so befindet sich die Verstelleinheit insbesondere in einem Zustand, in dem die maximale Mischwassertemperatur, welche bevorzugt der Heißwassertemperatur entsprechen kann, eingestellt ist. Die Führungsbahn ist bevorzugt insbesondere so eingerichtet, dass der Drehgriff um mehr als 360°, bevorzugt um mehr als 420° verdreht werden muss, um den Anschlagkörper von dem einen Endanschlag zu dem anderen Endanschlag zu überführen. Da somit ein großer Drehwinkel zur Einstellung der Mischwassertemperatur zur Verfügung steht, kann die Mischwassertemperatur fein eingestellt werden.

Allerdings ist es wünschenswert, dass ein Benutzer die Mischwassertemperatur nur zwischen einer minimalen Mischwassertemperatur und einer Mischwassertemperatur einstellen kann, bei der sich der Benutzer nicht verbrüht. Hierzu wird vorgeschlagen, dass die Führungsbahn einen Zwischenanschlag aufweist, der zwischen dem ersten Endanschlag am ersten Ende und dem zweiten Endanschlag am zweiten Ende der Führungsbahn angeordnet ist. Bei einer Drehbewegung aus der Position für die Einstellung der minimalen Mischwassertemperatur zur Erhöhung der Mischwassertemperatur kann der Anschlagkörper an den Zwischenanschlag gelangen, so dass ohne eine weitere Betätigung eine Mischwassertemperatur eingestellt ist, die zwar hoch ist, aber bei der sich ein Benutzer nicht verbrüht. Damit eine höhere Mischwassertemperatur eingestellt werden kann, wird vorgeschlagen, dass ein Benutzer den Anschlagkörper manuell bewegen kann, so dass der Anschlagkörper an dem Zwischenanschlag vorbeigeführt werden kann. In diesem Zusammenhang ist insbesondere vorgesehen, dass der Anschlagkörper also nicht nur in einer quer zu der Führungsbahn ausgerichteten ersten Richtung beweglich gelagert ist, sondern auch in einer Richtung orthogonal dazu.

Wenn die Führungsbahn beispielsweise spiralförmig ausgebildet ist, so kann vorgesehen sein, dass der Anschlagkörper nicht nur in radialer Richtung zum Folgen der spiralförmigen Führungsbahn beweglich gelagert ist, sondern auch in axialer Richtung von einem Benutzer bewegt werden kann. Wenn die Führungsbahn hingegen schraubenförmig ausgebildet ist und der Anschlagkörper zum Folgen der schraubenförmigen Führungsbahn in axialer Richtung beweglich gelagert ist, kann vorgesehen sein, dass der Anschlagkörper in radialer Richtung von einem Benutzer bewegt werden kann.

In diesem Zusammenhang ist insbesondere vorgesehen, dass die Führungsbahn einen Zwischenanschlag aufweist, dessen Höhe geringer ist als die Endhöhe der Endanschläge. Somit kann der Anschlagkörper zum Überwinden des Zwischenanschlags aus der beispielsweise als Nut ausgebildeten Führungsbahn herausgehoben werden und bei einer gleichzeitig eingeleiteten Drehbewegung über den Zwischenanschlag gehoben werden. Der Anschlagkörper ist dann insbesondere so in der Höhenrichtung beweglich gelagert, dass er zwar über den Zwischenanschlag abgehoben werden kann, nicht aber über den Endanschlag.

Bei einer solchen Ausführungsform ist insbesondere vorgesehen, dass der Träger, auf dem der Anschlagkörper verschiebbar gelagert ist, von einem Benutzer betätigt werden kann, um den Zwischenanschlag zu überwinden. Der Träger ist insbesondere manuell anhebbar. Hierbei kann aber auch eine Mechanik vorgesehen sein, die eine Druckbetätigung in eine Anhebebewegung des Trägers übersetzt.

Die Erfindung findet insbesondere Anwendung in einer Sanitärarmatur, bei der insbesondere an einem Armaturenkörper ein Kaltwasseranschluss, ein Heißwasseranschluss und ein Mischwasseranschluss ausgebildet sind und welche ein Thermostatmischventil mit einer erfindungsgemäßen Verstelleinheit umfasst.

Die Erfindung sowie das technische Umfeld werden im Folgenden anhand der Figuren beispielhaft erläutert. Es zeigen schematisch
Figur 1: eine Explosionsansicht einer Verstelleinheit und eine Thermostatkartusche,
Figur 2: eine Aufsicht auf einen Griffadapter der Verstelleinheit,

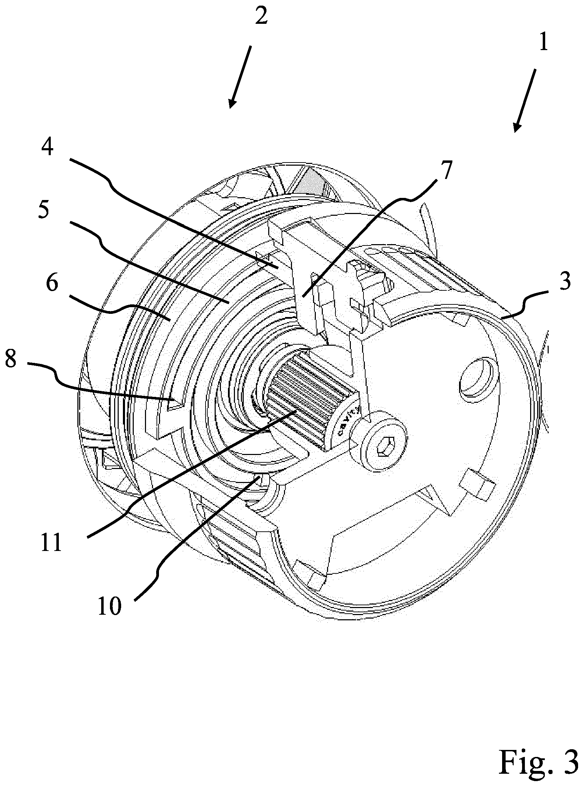

Figur 3: eine teilweise Schnittansicht durch die Verstelleinheit und

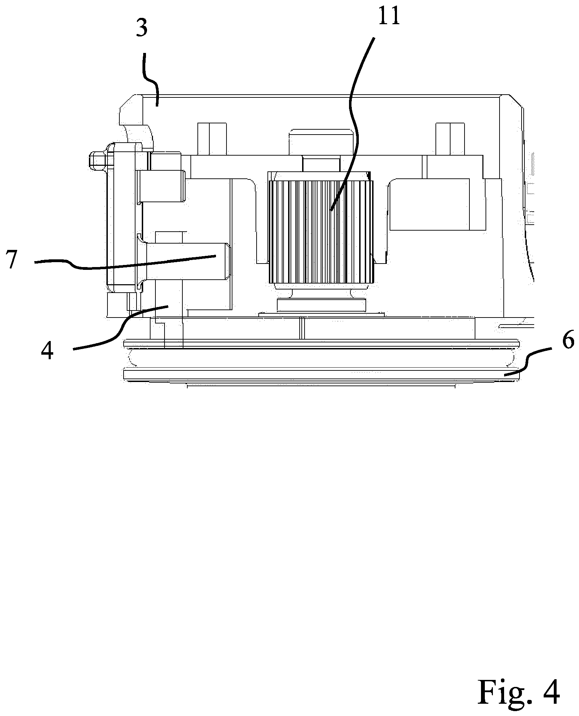

Figur 4: eine Schnittansicht durch die Verstelleinheit.

Das in den Figuren dargestellte sanitäre Thermostat-Ventil umfasst eine Verstelleinheit 1 und eine Thermostatkartusche 2.

Die Thermostatkartusche 2 weist ein Gehäuse 12 und eine Welle11 auf. In dem Gehäuse 12 ist ein Dehnstoffelement als Thermostatelement angeordnet, welches von einem Mischwasser umspült ist. Mit der Welle11 kann eine Lage eines Anschlags innerhalb der Thermostatkartusche eingestellt werden, wobei die Lage des Anschlags eine Mischwassertemperatur vorgibt.

Die Verstelleinheit 1 umfasst einen Griffadapter 6, der im montierten Zustand drehfest mit dem Gehäuse 12 verbunden ist, und einen Drehgriff 3, der im montierten Zustand drehfest mit der Welle 11 verbunden ist.

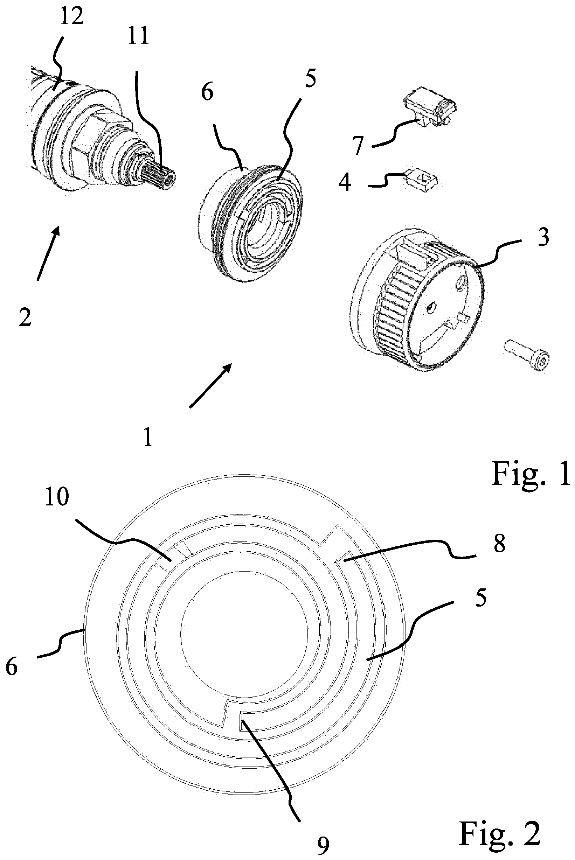

Der Griffadapter 6 weist auf seiner axial ausgerichteten, dem Drehgriff 3 zugewandten Seite eine Führungsbahn 5 auf. Die Führungsbahn 5 ist als Nut in dem Griffadapter 6 ausgebildet. Die Führungsbahn 5 ist spiralförmig geformt. Die Führungsbahn 5 weist einen ersten Endanschlag 8 und einen zweiten Endanschlag 9 an den Enden der Führungsbahn 5 auf. Die Endanschläge 8 und 9 weisen eine Höhe orthogonal zu der Zeichnungsebene der Figur 2 auf. Zwischen dem ersten Endanschlag 8 und dem zweiten Endanschlag 9 ist in der Führungsbahn 5 ein Zwischenanschlag 10 ausgebildet, dessen Höhe geringer ist als die Höhe der Endanschläge 8 und 9.

An dem Drehgriff 3 ist ein Anschlagkörper 4 beweglich gelagert. Hierzu ist an dem Drehgriff 3 ein Träger 7 vorgesehen, auf dem der Anschlagkörper 4 im montierten Zustand in radialer Richtung beweglich gelagert ist. Im montierten Zustand greift der Anschlagkörper 4 in die als Nut ausgebildete Führungsbahn 5 ein.

Wenn der Drehgriff 3 zum Verstellen des Anschlags der Thermostatkartusche 2 und somit zum Verstellen der Mischwassertemperatur gedreht wird, so befindet sich der Anschlagkörper 4 teilweise in der Führungsbahn 5, wobei der Anschlagkörper 4 in radialer Richtung auf den Träger 7 aufgrund der spiralförmigen Ausgestaltung der Führungsbahn 5 verschoben wird. Wenn der Anschlagkörper 4 bei einer Drehbewegung in Anlage mit dem ersten Endanschlag 8 oder dem zweiten Endanschlag 9 gelangt, so kann der Drehgriff nicht weitergedreht werden. Da sich die Führungsbahn 5 aufgrund ihrer spiralförmigen Ausbildung über mehr als 360° in Umfangsrichtung erstreckt, ist eine Feineinstellung der Mischwassertemperatur möglich.

Der Träger 7 ist zudem in axialer Richtung beweglich an dem Drehgriff 3 gelagert. Gelangt der Anschlagkörper 4 bei einer Drehbewegung in Anlage mit dem Zwischenanschlag 10, so kann ein Benutzer den Träger 7 in axialer Richtung anheben und den Drehgriff 3 gleichzeitig weiterdrehen, so dass der Anschlagkörper 4 über den Zwischenanschlag 10 gehoben wird. Da der Träger 7 in axialer Richtung nicht mehr als die Höhe der Endanschläge 8 und 9 angehoben werden kann, ist sichergestellt, dass der Anschlagkörper 4 nicht über die Endanschläge 8 und 9 hinaus bewegt wird, gleichzeitig aber über den Zwischenanschlag 10 gehoben werden kann. Für einen Benutzer ist somit eine Zwischenstellung deutlich erkennbar, bei der eine hohe, aber nicht zu hohe Mischwassertemperatur vorliegt. Zum Desinfizieren kann der Anschlagkörper 4 mit dem zweiten Endanschlag 9 in Anlage gebracht werden, in welchem Fall eine möglichst hohe Mischwassertemperatur oder die Heißwassertemperatur vorliegt.

### Bezugszeichenliste

- 1: Verstelleinheit
- 2: Thermostatkartusche
- 3: Drehgriff
- 4: Anschlagkörper
- 5: Führungsbahn
- 6: Griffadapter
- 7: Träger
- 8: erster Endanschlag
- 9: zweiter Endanschlag
- 10: Zwischenanschlag
- 11: Welle
- 12: Gehäuse

## Patentansprüche

1. Verstelleinheit (1) für eine Thermostatkartusche (2), wobei die Verstelleinheit (1)
• einen Drehgriff (3),
• einen beweglich gelagerten Anschlagkörper (4) und
• eine Führungsbahn (5) für den Anschlagkörper (4) umfasst,
**dadurch gekennzeichnet, dass**
die Führungsbahn (5) spiralförmig oder schraubenförmig ausgebildet ist und der Anschlagkörper (4) in einer quer zu der Führungsbahn (5) ausgerichteten ersten Richtung beweglich gelagert ist.

2. Verstelleinheit (1) nach Anspruch 1, wobei sich die Führungsbahn (5) in Umfangsrichtung um mehr als 360° erstreckt.

3. Verstelleinheit (1) nach einem der vorhergehenden Ansprüche, wobei der Anschlagkörper (4) durch manuelle Betätigung relativ zu der Führungsbahn (5) und orthogonal zu einer quer zu der Führungsbahn (5) ausgerichteten ersten Richtung bewegbar ist.

4. Verstelleinheit (1) nach einem der vorhergehenden Ansprüche, wobei die Führungsbahn (5) zwischen einem ersten Ende und einem zweiten Ende einen Zwischenanschlag (10) aufweist.

5. Verstelleinheit (1) nach Anspruch 4, wobei die Führungsbahn (5) zumindest an einem Ende einen Endanschlag (8, 9) mit einer Endhöhe aufweist, wobei der Zwischenanschlag (10) eine Höhe aufweist, die geringer ist als die Endhöhe.

6. Verstelleinheit (1) nach einem der vorhergehenden Ansprüche, wobei der Anschlagkörper (4) beweglich an dem Drehgriff (3) angebracht ist.

7. Verstelleinheit (1) nach einem der vorhergehenden Ansprüche, wobei der Anschlagkörper (4) auf einem Träger (7) verschiebbar gelagert ist, so dass der Anschlagkörper (4) während einer Drehbewegung des Drehgriffs (3) relativ zu dem Träger (7) beweglich ist.

8. Verstelleinheit (1) nach Anspruch 7, wobei der Träger (7) manuell betätigbar ist.

9. Verstelleinheit (1) nach einem der vorhergehenden Ansprüche, wobei die Führungsbahn (5) an einem Griffadapter (6) ausgebildet ist, der drehfest mit der Thermostatkartusche (2) verbindbar ist.

10. Sanitäres Thermostatmischventil mit
- einer Thermostatkartusche (2), umfassend
• ein Thermostatelement und
• einen Anschlag für das Thermostatelement, wobei eine Höhe einer Solltemperatur von der Lage des Anschlags abhängt, und
- einer Verstelleinheit (1) nach einem der vorhergehenden Ansprüche, wobei der Drehgriff (3) mit dem Anschlag gekoppelt ist und die Lage des Anschlags mittels der Verstelleinheit (1) veränderbar ist.

11. Sanitärarmatur, umfassend zumindest
- einen Kaltwasseranschluss,
- einen Heißwasseranschluss,
- einen Mischwasseranschluss und
- ein sanitäres Thermostatmischventil nach Anspruch 10.
